# EUROPEAN PATENT SPECIFICATION

(11) **EP 1 687 383 B1**
(45) Date of publication and mention of the grant of the patent: **18.03.2009**
(21) Application number: 03818978.3
(22) Date of filing: 07.10.2003
(51) Int. Cl.: C09D 127/16, C09D 127/12

(54) **FLUOROPOLYMER LOW REFLECTING LAYERS FOR POLASTIC LENSES AND DEVICES**
REFLEXIONSARME SCHICHTEN AUS FLUOROPOLYMER FÜR KUNSTSTOFFLINSEN UND -GEGENSTÄNDE
COUCHES FLUOROPOLYMERES FAIBLEMENT REFLECHISSANTES POUR LENTILLES ET DISPOSITIFS EN PLASTIQUE

(43) Date of publication of application: 09.08.2006
(73) Proprietor: E.I. DU PONT DE NEMOURS AND COMPANY, Wilmington, DE 19898 (US)
(72) Inventor: IWATO, Satoko, Shibuya-ku, Tokyo 150-0001 (JP); KAKU, Mureo, Utsunomiya, Tochigi 320-003 (JP); FEIRING, Andrew, Edward, Wilmington, DE 19807 (US); USCHOLD, Ronald, Earl, West Chester, PA 19382 (US); WHELAND, Robert, Clayton, Wilmington, DE 19807 (US)
(74) Representative: Matthews, Derek Peter
(86) International application number: PCT/US2003/032090
(87) International publication number: WO 2005/044939

(56) References cited:
- EP-A- 0 365 933
- WO-A-00/55130
- WO-A-01/37043
- DE-A- 3 227 045
- FR-A- 1 350 581
- GB-A- 871 582
- GB-A- 1 395 609
- US-A- 3 023 187
- US-A- 3 194 796
- US-A- 3 235 537
- US-A- 4 123 603
- US-A- 4 335 238
- US-A- 4 395 445
- US-A- 4 546 141
- US-A- 4 764 431
- US-A1- 2002 094 440
- US-A1- 2003 166 807
- US-A1- 2003 170 455

## Description

### FIELD OF INVENTION

The present invention relates to fluoropolymer coated plastics. More specifically, it relates to fluoropolymer coated plastics having good adhesion, low reflective properties, and water and oil repellency.

### TECHNICAL BACKGROUND

Much work has been done concerning low reflective plastics, particularly for plastic lenses and optical devices. One method used is vapor disposition of oxidized metal on the surface of the plastic. However, this method uses a batch process and when the substrate is large, the productivity becomes low. Another way is to apply a coating of fluoropolymer solutions. The coating is done by a dipping process and is applicable for large substrates with high productivity. Though fluoropolymers have low reflective indexes, they also have very poor adhesion with plastic substrates. Improvement in the adhesion between fluoropolymers and substrate plastics has been long sought. The purpose of this invention is to provide the technology for low reflective index and good adhesion using fluoropolymer solutions.

US 32 35 537 discloses a VF₂/TFE/PHVE copolymer that may be used for coating fabrics or as protective coating.

### SUMMARY OF THE INVENTION

The one layer coating system provided by the present invention comprises a fluorinated copolymer having the formula

VF₂/TFE/PMVE

wherein the VF₂ content is about 18-60 mole % and the TFE/PMVE mole ratio is 0.1-1.9. Preferably the VF₂ content is about 30-35 mole %, the TFE/PMVE mole ratio is about 0.2-0.3 and the substrate is PMMA.

In the one layer coating systems of the present invention, the thickness of the coating is between about 10 and 1000 nm, more preferably, between about 30 and 120 nm, and most preferably between about 70 and 120 nm.

### DETAINED DESCRIPTION OF THE INVENTION

One layer systems have been found that afford low reflection coatings on optically clear plastic substrates with good adhesion. Preferred substrates are PMMA, PC, PET, and PS, and glass.

The one layer coating system provided by the present invention comprises a fluorinated copolymer having the formula

VF₂/TFE/PMVE

wherein the VF₂ content is about 18-60 mole % and the TFE/PMVE mole ratio is 0.1-1.9. Preferably the VF₂ content is about 30-35 mole %, the TFE/PMVE mole ratio is about 0.2-0.3 and the substrate is PMMA.

In the one layer coating systems of the present invention, the coating needs to be thicker than about 10 nm in order to observe a significant reduction in reflectivity. While thicknesses greater than 10 nm work well, practical problems eventually arise as the coating is made thicker. For example, above about 1000 nm, thickness variation can become a problem, and, if the coating polymer is expensive, economics start to be prohibitive. Thus, in the one layer coating system of the present invention, the thickness of the coating is between about 10 and 1000 nm, more preferably, between about 300 and 120 nm, most preferably, between about 70 and 120 nm.

The coatings can be prepared using any method known in the art. Suitable solvents used for preparing the coatings are those which dissolve the coating composition but are inert to the substrate being coated. Preferred solvents include fluorosolvents such as Fluorinert® (3M Electronic Materials, St. Paul, Minnesota), Vertrel®. (E. I. DuPont de Nemours, Wilmington, DE) or Novec® (3M Electronic Materials, St. Paul, Minnesota), and ketone solvents such as methyl isobutyl ketone or acetone, isobutyl acetate, and combination of two or more thereof.

Other ingredients may be added to any or all of the compositions described above. In addition to the components discussed above, the compositions of this invention may contain additives commonly employed with synthetic polymers, such as colorants, antioxidants, tougheners, nucleating agents, ultraviolet light stabilizers, heat stabilizers, co-agents, and crosslinking agents. These ingredients are each typically

The following non-limiting Examples are meant to illustrate the invention but are not intended to limit it in any way.

### Materials and Methods

The following definitions are used herein and should be referred to for claim interpretation.
APS -Ammonium persulfate
HFIB - Hexafluoroisobutylene, (CF₃)₂C=CH₂
HFP - Hexafluoropropylene, CF₂=CF-CF₃
PC - Polycarbonate
PET - Polyethyleneterephthalate
PMMA - Polymethylmethacrylate
PMVE - Perfluoromethylvinylether
PVOH - Polyvinyl alcohol
PS - Polysulfone
Teflon® AF - TFE/Perfluoro-2,2-dimethyldioxole copolymer
TFE - Tetrafluoroethylene, CF₂=CF₂
VAc - Vinyl acetate, CH₃-C(O)-OCH=CH₂
VF - Vinyl fluoride, CH₂=CHF
VF₂ - Vinylidene fluoride, CF₂=CH₂

Unless otherwise indicated, the following test methods were used:

### Method of measuring transmission

Light transmission was measured at 500 nm using a Shimadzu #UV-3100 Spectrometer. This machine measures a continuous comparison of a split beam, part of which passes through the sample.

### Adhesion Test Method

A tool with 10 razor blades separated by a distance of 1 mm was used to cut the coating down to the plastic substrate, drawing the razor blade tool first in one direction and then a second time in a perpendicular direction. This cuts 100 crosshatched squares. Scotch tape was applied to the crosshatched area with moderate pressure and pulled off rapidly. Adhesion is scored as the number of squares out of 100 still attached to the substrate.

Unless otherwise indicated, all other polymers and monomers were obtained are commercially available.

VF2/TPE/PMVE terpotymers can be run under ordinary emulsion and bulk polymerization methods known in the art, see for instance Encyclopedia of Polymer Science and Engineering, 1989, Vol.16, pg. 601-603 and Vol. 7, pg. 257-269, John Wiley & Sons. Non-crystalline compositions showing good optical clarity and easy solution coatability were then selected for this invention.

### EXAMPLE

Solutions, 3wt% poly(VF2/TFE/PMVE = 32/15/53 mole %) in Novec® HFE-7200 (3M Electronic Materials, St. Paul, Minnesota) were made by agitating chunks of the polymer with solvent for several days at room temperature. PMMA plates measuring 2.5 cm by 5.0 cm by 3 mm thick were used for testing. Polymer films were prepared as in Examples 1 to 7. Lifting up speed was 75 mm/min. Transmittance and adhesion were measured with the results shown in Table 9.

**TABLE 9**

| | Example #28 |
|---|---|
| VF2 (mol%) | 32 |
| TFE (mol%) | 15 |
| PMVE (mol%) | 53 |
| Substrate | PMMA |
| Adhesion(/100) | 100 |
| Transmittance(%) | 98 |

Simultaneous good adhesion (>96/100) and improved transmittance (>95%) relative to uncoated PMMA were observed.

## Claims

1. A one layer coating system for coating a substrate comprising a fluorinated copolymer having the formula
VF₂/TFE/PMVE
wherein the vinylidene fluoride (VF₂) content is 18-60 mole % and the mole ratio of tetrafluoroethylene (TFE) to perfluoromethylvinylether (PMVE) is 0.1-1.9,
the thickness of the coating is between 10 nm and 1000 nm.

2. The coated substrate of Claim 1 wherein the VF₂ content is 30-35 mole %, the TFE/PMVE mole ratio is 0.2-0.3 and the substrate is polymethylmethacrylate.

3. The coated substrate of any Claim 1 or Claim 2 wherein the thickness of the coating is between 70 nm and 120 nm.

## Patentansprüche

1. Einschichtiges Beschichtungssystem zum Beschichten eines Substrats, das ein fluoriertes Copolymer mit der folgenden Formel aufweist:
VF₂/TFE/PMVE
wobei der Gehalt an Vinylidenfluorid (VF₂) 18-60 Mol-% und das Molverhältnis von Tetrafluorethylen (TFE) zu Perfluormethylvinylether (PMVE) 0,1 -1,9 beträgt,
wobei die Dicke der Beschichtung zwischen 10 nm und 1000 nm liegt.

2. Beschichtetes Substrat nach Anspruch 1, wobei der VF₂-Gehalt 30-35 Mol-% beträgt, das TFE/PMVE-Molverhältnis 0,2-0,3 beträgt und das Substrat Polymethylmethacrylat ist.

3. Beschichtetes Substrat nach einem der Ansprüche 1 oder 2, wobei die Dicke der Beschichtung zwischen 70 nm und 120 nm liegt.

## Revendications

1. Système de revêtement à une couche pour revêtir un substrat comprenant un copolymère fluoré de formule
VF₂/TFE/FMVE
dans lequel la teneur en fluorure de vinylidène (VF₂) est 18 à 60% molaire et le rapport molaire de tétrafluoroéthylène (TFE) sur perfluorométhylvinyléther (PMVE) est 0,1 à 1,9,
l'épaisseur du revêtement est entre 10 nm et 1000 nm.

2. Substrat revêtu selon la revendication 1, dans lequel la teneur en VF₂ est 30 à 35% molaires, le rapport molaire TFE/PMVE est 0,2 à 0,3 et le substrat est du polyméthylméthacrylate.

3. Substrat revêtu selon l'une quelconque de la revendication 1 ou de la revendication 2, dans lequel l'épaisseur du revêtement est entre 70 nm et 120 nm.
